**Europäisches Patentamt**

**European Patent Office**

**Office européen des brevets**

(19)

(11) Veröffentlichungsnummer: **0 196 658**
**B1**

(12) **EUROPÄISCHE PATENTSCHRIFT**

(45) Veröffentlichungstag der Patentschrift:
08.06.88

(51) Int. Cl.⁴: **F 16 B 31/04,** F 16 B 33/00,
F 16 B 35/04

(21) Anmeldenummer: **86104461.8**

(22) Anmeldetag: **29.06.84**

(54) **Verbindungselement für zwei Maschinen- oder Bauteile, wie Pass-Dehngewindebolzen.**

(30) Priorität: **02.09.83 DE 8325206 U**

(43) Veröffentlichungstag der Anmeldung:
**08.10.86 Patentblatt 86/41**

(45) Bekanntmachung des Hinweises auf die Patenterteilung:
**08.06.88 Patentblatt 88/23**

(84) Benannte Vertragsstaaten:
**AT BE CH DE FR GB IT LI LU NL SE**

(56) Entgegenhaltungen:
**DE-A-2 102 910**
**DE-A-2 233 560**
**US-A-4 338 054**

(73) Patentinhaber: **Friedr. Boesner GmbH,**
**Augustenthaler Strasse, D-5450 Neuwied 13 (DE)**

(72) Erfinder: **Taubert, Hubert, Dipl.- Ing.,**
**Klosterstrasse 12, D-5450 Neuwied 21 (DE)**

(74) Vertreter: **Patentanwälte Dipl.- Ing. J. Richter**
**Dipl.- Ing. F. Werdermann, Neuer Wall 10, D-2000**
**Hamburg 36 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verbindungselement für zwei Maschinen- oder Bauteile, wie Paß-Dehngewindebolzen, mit einem Schaft, der an seinem einen Ende mit einem Antrieb versehen ist und der benachbart zu seinem Antrieb ein erstes Befestigungsgewinde und an seinem anderen Ende ein zweites Befestigungsgewinde aufweist, das als Festsitzgewinde ausgebildet ist.

Schrauben brechen bei dynamischer Beanspruchung überwiegend im ersten tragenden Gang des Gewindes oder unter dem Kopf. Die größte dynamische Beanspruchung, die ein Werkstoff ohne zu brechen noch eben dauernd erträgt, wird mit Dauerfestigkeit wie folgt bezeichnet:

$$\sigma_D = \sigma_M \pm \sigma_A,$$

wobei    $\sigma_D$    = Dauerfestigkeit,
         $\sigma_M$    = mittlere statische Belastung bzw. Vorspannung,
         $\sigma_A$    = Spannungsausschlag der Wechselbeanspruchung

ist.

Dieser gerade noch dauernd ertragbare Spannungsausschlag ist für Stahlschrauben mit einer Festigkeit 800 bis 1200 N/mm² $\sigma_A = 60$ N/mm² und für sehr hochfeste Schrauben 1300 bis 1400 N/mm² $\sigma_A = 100$ N/mm² Dieser Spannungsausschlag ist praktisch unabhängig von der Vorspannung und der Stahlqualität

Die Erkenntnisse über den Einfluß der Elastizitätsverhältnisse zwischen der Schraube und den von ihr verspannten Teilen ermöglicht es, den von der Schraube spürbaren Spannungsausschlag zu senken. Bei gegebener dynamischer Beanspruchung einer Schraubenverbindung wird der vom Gewinde spürbare Anteil der dynamischen Last (Spannungsausschlag $\sigma_A$) umso kleiner, je weicher die Federung der Schraube und je härter und steifer die verspannten Teile der Verbindung sind.

Aufgrund der höheren Anforderungen, z. B. an Verbrennungsmotoren von Kraftfahrzeugen, werden die Drehzahlen und Kolbengeschwindigkeiten erhöht. Hierdurch steigen auch die Belastungen an den Schraubenbolzen, die die Verbindung zwischen dem Pleuelfuß und dem Pleueldeckel einer Pleuelstange herstellen. Neuere Vorschriften sehen, z. B. für Pleuelschrauben, höhere und eingeengte Zugfestigkeiten, z. B. $\sigma_b = 1100$ bis 1200 N/mm²; 1200 bis 1300 N/mm² und 1300 bis 1400 N/mm² mit einer Vorspannung von etwa 90 % und größer der Streckgrenze $\sigma_S$ vor.

Hiermit ist ein Produkt entwickelt worden, das die beiden zu verbindenden Teile wie Pleuelfuß des Pleuelschaftes und Pleueldeckel mit sehr hoher Vorspannung im Streckgrenzbereich des Bolzens zusammenfügt.

Diese Anforderungen werden erreicht durch die Auswahl geeigneter Werkstoffqualitäten und Wärmebehandlungsverfahren, um hierdurch höhere Qualitätsgüten mit größerer Elastizitätseigenschaft bei hoher Festigkeit zu erzielen.

Darüber hinaus ist es erforderlich, durch geometrische Änderungen des Bolzens die elastische Dehnung zu erhöhen.

Hiervon ausgehend ist die Dehnschraube entwickelt worden, die bei Verschraubungen verwendet wird, die dauernden Wechselbelastungen ausgesetzt sind, und bei der es sich um eine Schraube mit einem dünnen Schaft handelt, die sehr elastisch federnd ist, wodurch die Dauerbruchgefahr der Schraubenverbindung vermindert wird. Diese Dehnschraube besitzt einen Schaftteil mit einem verjüngten Durchmesser, der etwa 90 % des Gewindekerndurchmessers entspricht. Die Paßschraube ist zusätzlich mit einer Passung oder mit zwei Passungen versehen, deren Durchmesser größer sind als der Gewindeaußendurchmesser der Schraube, die mit zugeordneten Passungen der Bohrung zusammenarbeiten und im Bereich der Schraubenmitte und evtl. im Bereich des Kopfendes liegen. An dem dem Kopfende gegenüberliegenden Ende ist das Schraubengewinde vorgesehen. In gleicher Weise sind auch Paß-Dehnbolzen ausgebildet.

Das gegenüberliegende Kopfende läuft in Richtung auf den Schraubenschaft bzw. Bolzenschaft in eine besonders ausgerundete Hohlkehle aus.

Durch die DE-A-22 33 560 ist ein Verfahren zur Herstellung von Dehnschäften an Werkstücken für Verbindungselemente, wie Schrauben, Stifte, Bolzen u.dgl. bekannt, nach dem mindestens über einen Teil der Länge des Werkstückes Umfangsrillen eingewalzt oder eingerollt werden, wobei der Roll- oder Walzvorgang ausgehend vom Rohlingsdurchmesser (Walzdurchmesser) bis zu einer Tiefe durchgeführt wird, bei welcher der entsprechende Kerndurchmesser ($d_4$) dem Maß

$$d_4 = \sqrt{\frac{C \cdot L}{E} \cdot \frac{4}{\pi}} = 2\sqrt{\frac{1}{\pi} \cdot \frac{C \cdot L}{E \cdot \lambda}}$$

entspricht, wobei E der Elastizitätsmodul des Materials, C die gewünschte Federkonstante, L die Länge des Dehnteils und λ die gewünschte elastische Längung des Dehnteils unter Einwirkung der Axialkraft F ist. Der nach diesem Verfahren hergestellte Dehnschaft weist auf seinem Umfang über einen Teil seiner Schaftlänge

2

Umfangsrillen mit dazwischenliegenden Wulsten auf, wobei die Umfangsrillen als geschlossene parallele Ringnuten ausgebildet sind und sowohl die Ringnuten als auch die Wulste etwa kreisbogenförmig begrenzt sind. An den Schaftabschnitt mit den Wulsten und Ringnuten schließt sich ein Befestigungsgewinde an. Bei diesem Dehnschaft ist der Spannungsquerschnitt im Kerbgrund der Ringe kleiner als der Spannungsquerschnitt des Befestigungsgewindes.

Ein Gewindebolzen der eingangs beschriebenen Art ist durch die DE-A-2 102 910 bekannt, die eine hochbelastbare, durch ein Vorspanngerät in axialer Richtung vorzuspannende Gewindeverbindung mit einem Bolzen, dessen Außengewinde trapezförmig ausgebildet ist und einen Flankenwinkel von weniger als 45° aufweist und bei der die Steigung mehr als das 1,5 fache der Gangtiefe beträgt, wobei der Schaft des Bolzens an seinen beiden Enden mit Gewinden versehen ist. Die beiden Befestigungsgewinde weisen gleiche Spannungsquerschnitte auf. Außerdem ist der Gewindebolzen nicht mit Paß-Dehnringen versehen, um als Paß-Dehngewindebolzen eingesetzt werden zu können.

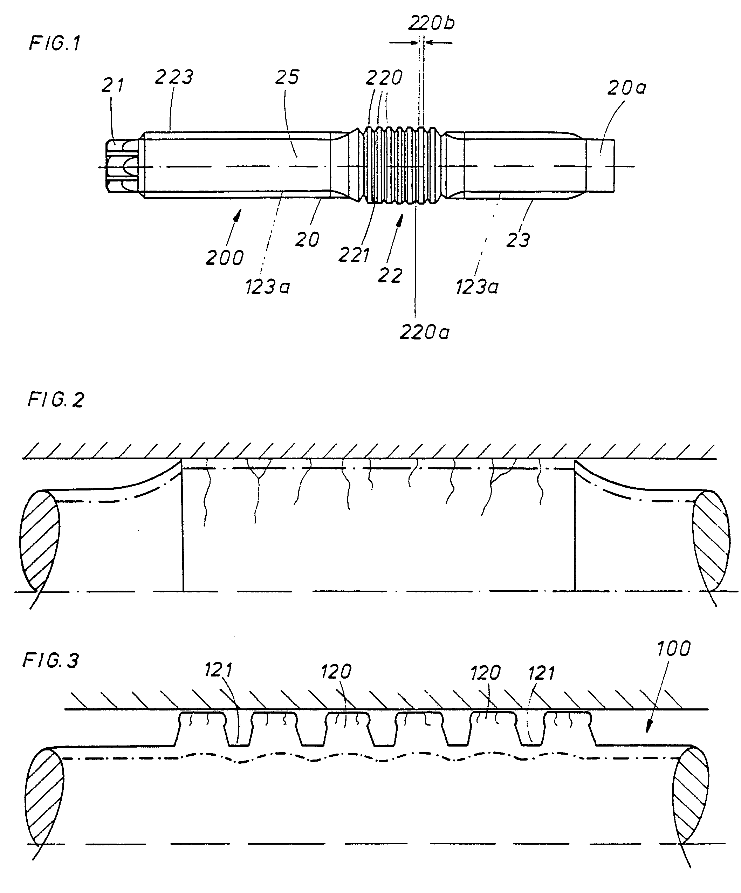

Die statische Belastbarkeit der bekannten Paß-Dehnschrauben und auch der Paß-Dehnbolzen ist aufgrund des verjüngten Dehnungschaftes über die gesamte Schaftlänge nicht gleich. Ferner haben die Paß-Dehnschrauben und Paß-Dehnbolzen aufgrund der Durchmesserunterschiede auf dem Schaftkörper zum Gewindekern Dehnungssprünge, die eine gleichmäßige elastische Dehnung über die gesamte Schaftlänge verhindern. Des weiteren tritt bei dynamischer Belastung aufgrund der auftretenden Querkräfte und der Vibration in den Schrauben bzw. Bolzen am zylindrischen Paßsitz in Verbindung mit dem Sitz der Bohrung eine Paßflächenkorrosion auf, die eine molekulare Oberflächenzerstörung bewirkt. Diese Paßflächenkorrosion führt zu Oberflächenrissen (Fig.2) und zu Brücken, die schwere Beschädigungen des Motors zur Folge haben. Durch kleine Amplituden aufweisende Relativbewegungen der Kontakt-Oberflächen der Paßteile entstehen Wellen mit kleiner Amplitude, aber hoher Frequenz, d.h. Mikrowellen, die eine hohe lokale Überhitzung fördern und eine Oxidation in den Oberflächenkristallen hervorrufen. Diese heißen Oxid-Teilchen haben die Wirkung eines Schleifmittels und bewirken Risse und Zerstörungen der Paßoberfläche mit Bruchfolge.

Die Erfindung löst die Aufgabe, ein verbessertes Verbindungselement, wie Paß-Dehngewindebolzen, mit hoher Festigkeit zu schaffen, bei dem der zwischen je zwei konzentrischen Paß-Dehnringen liegende Kerbgrund und der Kern der Befestigungsgewinde derart zusammenwirken, daß an dem Bolzenkörper während der durch die Zugbeanspruchung des Paß-Dehngewindebolzens verursachten elastischen Dehnung keine Dehnungssprünge oder -risse auftreten und eine Erweiterung der Gleichmaßdehnung erzielt wird, und das so ausgebildet ist, daß eine spielfreie Anlage der Paß-Dehnringe mit der Paßbohrung im Werkstück, Maschinen- oder Bauteil stabilisiert ist, und daß darüber hinaus sowohl eine genaue Passung in Bezug auf die Paßbohrung in einem Werkstück, Maschinen- oder Bauteil, wie Pleuelstange od.dgl., als auch eine enge Koaxialitätstoleranz zwischen dem Befestigungsgewinden und dem Paßdurchmesser am Kamm der Paß-Dehnringe gewährleistet ist.

Zur Lösung dieser Aufgabe wird ein Verbindungselement für zwei Maschinen- oder Bauteile, wie Paß-Dehngewindebolzen, der eingangs genannten Art, vorgeschlagen, das erfindungsgemäß in der Weise ausgebildet ist, daß der Schaft an seinem das zweite Befestigungsgewinde tragenden Ende gegebenenfalls einen Führungsund Aufsitz- bzw. Gegendruckzapfen und zwischen den beiden Befestigungsgewinden einen Schaftabschnitt mit einer Anzahl von parallel zueinander verlaufenden, konzentrischen Paß-Dehnringen aufweist, deren Durchmesser um 0,1 bis 0,5 mm nach der Formel

$$d_{konz.Ringe} > d_1$$

größer als der Außendurchmesser der beiden Befestigungsgewinde ist und die einen Spannungsquerschnitt in dem Kerbgrund der Paßnuten zwischen je zwei konzentrischen Paß-Dehnringen [$A_{konz.Ringe}$] aufweisen, der dem Spannungsquerschnitt [$A_S$] der Befestigungsgewinde nach der Formel

$$A_S = A_{konz.Ringe}$$

entspricht, wobei der Kerbgrund durch einen Radius bestimmt ist, der das Zwei- bis Dreifache des Kernradius der Befestigungsgewinde beträgt oder durch zwei Radien bestimmt ist, die jeweils dem Zwei- bis Dreifachen des Kernradius der Befestigungsgewinde entsprechen, und daß die Kammbreite der konzentrischen Paß-Dehnringe annähernd der Flankenbreite der Vorform der Paß-Dehnringe zur Erzielung einer angemessenen Größe der spielfreien Anlagefläche zwischen dem Paß-Dehnschraubenbolzen und der Paß-Bohrung in den Maschinen- oder Bauteilen entspricht.

Hiernach ist ein Verbindungselement, wie Paß-Dehngewindebolzen, geschaffen, das aufgrund der gleichen Spannungsquerschnitte der Befestigungsgewinde und der konzentrischen Paß-Dehnringe nach der Formel

$$A_S = A_{konz.Ringe}$$

gegenüber dem herkömmlichen Dehn-Gewindebolzen

$$A_{S\ Dehnschaft} = 90\,\%\ A_S$$

eine sehr hohe Zugfestigkeit bei großer Gleichmaßdehnung aufweist, wie dies aus dem σ-ε-Diagramm von

3

Pleuelschrauben entsprechend Fig. 5 hervorgeht, in der mit 1 die Kurve für Dünnschaftschrauben

$$A_S < A_{Schaftdurchmesser},$$

mit 2 die Kurve für Paß-Dehnschrauben mit konzentrischen Ringen

$$A_S = A_{konz.Ringe}$$

und mit 3 die Kurve für Dehnschrauben

$$A_S > A_{Dehnschaft\ (Taillendurchmesser)}$$

angegeben ist.

Außerdem sind parallel verlaufende konzentrische Paß-Dehnringe, die ebenfalls durch Gewinderollen oder -walzen hergestellt werden, im mittleren Bereich des Schaftes im Anschluß an das Befestigungsgewinde bis zur Hohlkehle unter dem Kopf angeordnet.

Der Außendurchmesser der konzentrischen Paß-Dehnringe, gemessen über dem Kamm, ist um 0,1 bis 0,5 mm größer als der Außendurchmesser des Gewindes nach der Formel

$$d_{konz.Ringe} > d_1,$$

d.h. daß das Paßmaß der konzentrischen Paß-Dehnringe um 0,1 bis 0,5 mm größer als der Nenndurchmesser des Befestigungsgewindes ist.

Der Spannungsquerschnitt im Kerbgrund der konzentrischen Paßringe $[A_{konz.Ringe}]$ ist gleich dem Spannungsquerschnitt der Befestigungsgewinde $[A_S]$ nach der Formel

$$A_S = A_{konz.\ Ringe}.$$

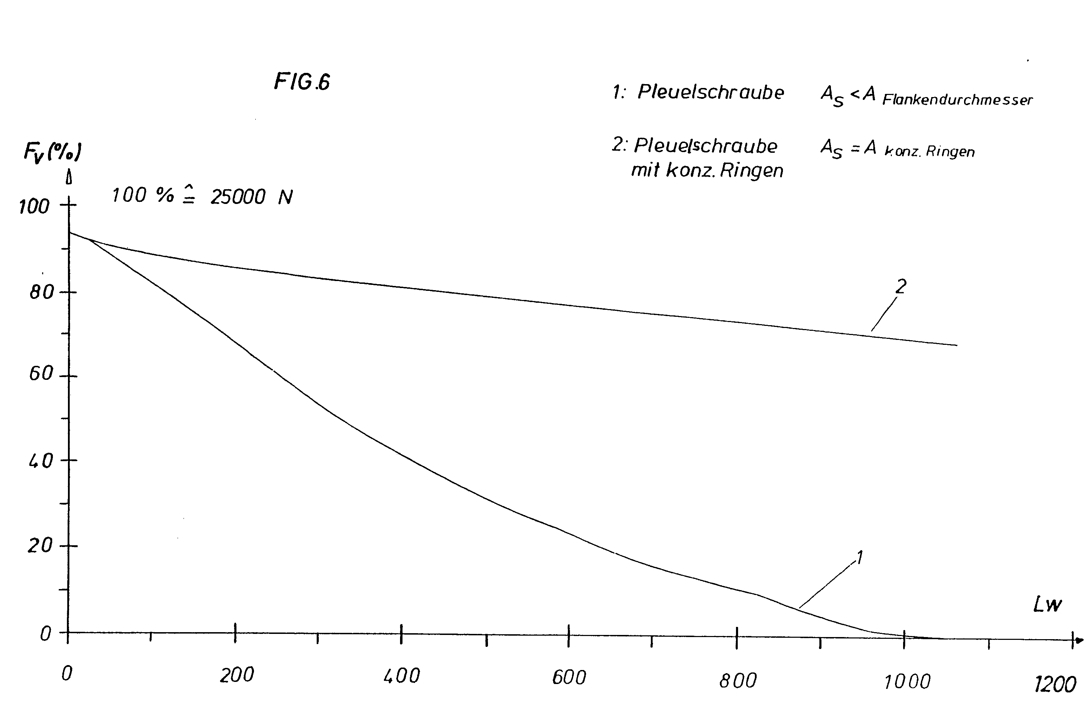

Hierdurch wirken die konzentrischen Nuten der Paß-Dehnringe und der Kern der Befestigungsgewinde dahingehend zusammen, daß bei dem Schaft während der durch die Zugbeanspruchung verursachten elastischen Dehnung der Paß-Dehngewindebolzen kein Dehnungssprung auftritt und hierdurch eine erhöhte Vibrationssicherheit und somit eine verbesserte Dauerhaltbarkeit gegeben ist (Fig.6) Ferner wird eine Erweiterung der Gleichmaßdehnung erzielt. Der Radius im Kerbgrund der konzentrischen Paß-Dehnringe beträgt das Zwei- bis Dreifache des Kernradius der Befestigungsgewinde, wobei der Kerbgrund auch zwei Radien aufweisen kann, die jeweils dem Zwei- bis Dreifachen des Kernradius der Befestigungsgewinde entsprechen.

Die Kammbreite der konzentrischen Paß-Dehnringe ist dabei ungefähr gleich dem Flankenbereich der Vorform der Paß-Dehnringe. Hierdurch wird die spielfreie Anlage mit der Paßbohrung stabilisiert, wodurch eine Erhöhung der Verschleißfestigkeit erreicht wird.

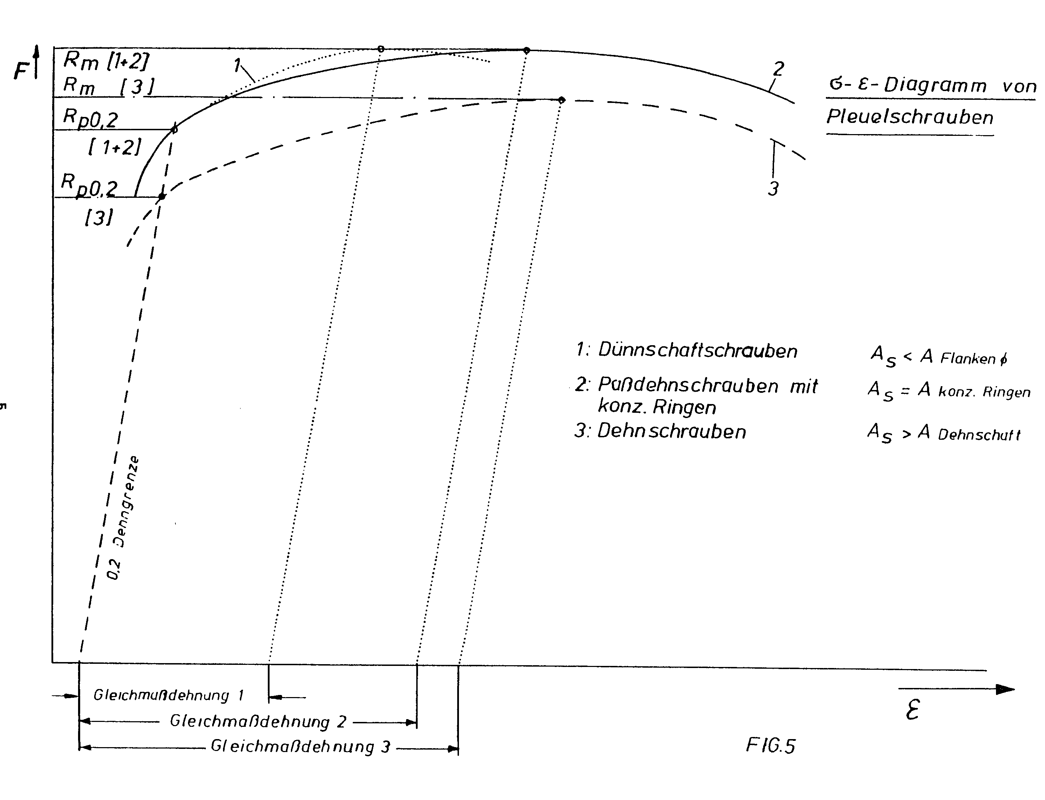

Der letzte Arbeitsgang bei der Herstellung der konzentrischen Paß-Dehnringe ist ein Egalisier-Roll- bzw. Glätt-Walzvorgang (Fig.4) in Kombination mit den Walzen des Befestigungsgewindes, um die Koaxialität zu gewährleisten. Hierdurch wird sowohl die genaue Passung in Bezug auf die Paßbohrung, z. B. bei einer Pleuelstange, als auch die geforderte enge Koaxialitätstoleranz zwischen den Befestigungsgewinden und dem Paßdurchmesser am Kamm der konzentrischen Paß-Dehnringe gewährleistet.

Der kombinierte Gewinde-, Roll-, Egalisier-Walz-Vorgang zur Herstellung des Befestigungsgewindes und des Außendurchmessers der konzentrischen Paß-Dehnringe wird in vergütetem Zustand durchgeführt. Hierdurch wird aufgrund der initierten Oberflächenverfestigung der Gewinde eine Erhöhung der Dauerhaltbarkeit erzielt.

Bei Paß-Dehngewindbolzen mit beidseitiger gleicher oder ungleicher Gewindedimension ist ein Paßteil mit parallelen konzentrischen Paß-Dehnringen zwischen den Befestigungsgewinden angeordnet, wobei auch hier die Geometrie und die Herstellung, wie voranstehend beschrieben, zu treffen.

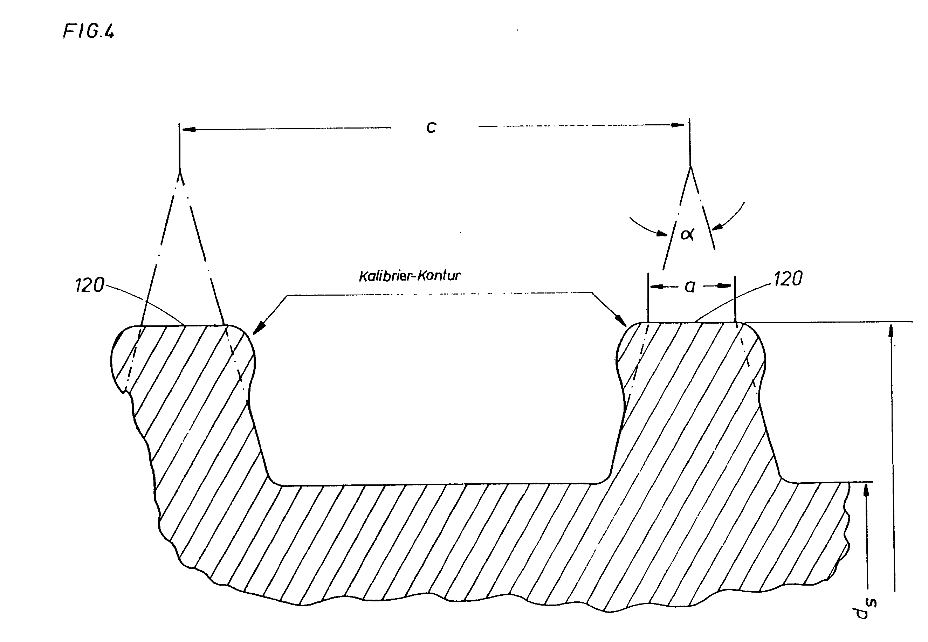

Bei den bekannten Verfahren zur Herstellung von Schraubenpleuelbolzen hat der als Ausgangsmaterial benutzte Bolzenschaft einen größeren Durchmesser während der Kaltumformung. Durch nachfolgende, spanabhebende Bearbeitung wird die Aussparung der Taillen und die Ausrundung der Hohlkehle unter dem Kopf durch Drehen sowie der Paßsitz durch Schleifen hergestellt. Diese kostenaufwendigen, spanabhebenden Arbeitsvorgänge entfallen bei der Herstellung der erfindungsgemäßen Paß-Dehngewindebolzen. Aufgrund der vorgesehenen parallelen, konzentrischen Paß-Dehnringe wird die elastische Dehnung ohne Sprünge gleichmäßig über den gesamten Bolzenschaft (Gleichmaßdehnung) und die Vibrationssicherheit der Schraubenverbindung sowie die Dauerfestigkeit erheblich gesteigert, so daß Motorbeschädigungen aufgrund von Brüchen oder Rissen der Pleuelgewindebolzen vermieden werden, wie dies aus Fig. 6 ersichtlich ist, in der die Versuchsergebnisse der Untersuchungen von Verschraubungen gegen Lösen durch Vibration anhand der abgebildeten Kurven wiedergegeben sind. Ferner werden Schwierigkeiten verhindert, die auf eine Paßflächenkorrosion zurückzuführen sind, die sonst aufgrund der leichten Relativbewegung zwischen der Paßbohrung und dem zylindrischen Paßsitz durch molekulare Grenzflächenzerstörung auftritt (Fig. 3).

Es wird ein Paß-Dehngewindebolzen mit folgenden Eigenschaften erhalten:

- kein Dehnungssprung über die Klemmlänge,
- Erweiterung der Gleichmaßdehnung bei hoher Festigkeit σ-ε -Diagramm,
- durch Erweiterung der Gleichmaßdehnung bei hoher Festigkeit ist eine sichere Verschraubung im Streckgrenzenbereich gewährleistet,
- durch gleiche Spannungsquerschnitte $A_S = A_{konz.Ringe}$ ist eine höhere Zugfestigkeit gegenüber den herkömmlichen Dehngewindebolzen gegeben.

$$A_{Dehnschaft} = 90\,\% \; A_S$$

- höhere Zugfestigkeit durch die Geometrie der konzentrischen Paß-Dehnringe. Hierdurch unter Vorspannung einer Oberflächenverformung und somit Oberflächenverfestigung im Kerbgrund der konzentrischen Paß-Dehnringe,
- biegeweich, hierdurch größere Vibrationssicherheit und somit verbesserte Dauerhaltbarkeit.

Im folgenden wird der Gegenstand der Erfindung in den Zeichnungen erläutert. Es zeigt

Fig. 1 eine Seitenansicht eines Paß-Dehngewindebolzens,
Fig. 2 den Kraftlinienverlauf bei zylindrischem Paßsitz,
Fig. 3 den Kraftlinienverlauf bei konzentrischen Paß-Dehnringen,
Fig. 4 in einem senkrechten Schnitt einen Abschnitt des Paß-Dehngewindebolzens zur Veranschaulichung, daß die Kammbreite der konzentrischen Paß-Dehnringe annähernd der Flankenbreite der Vorform der Paß-Dehnringe entspricht,
Fig. 5 das σ-ε -Diagramm von Pleuelschrauben mit den Kurven für Dünnschaftschrauben, Paß-Dehnschrauben mit konzentrischen Paß-Dehnringen und Dehnschrauben,
Fig. 6 den Kurvenverlauf einer Pleuelschraube und einer Pleuelschraube mit konzentrischen Paß-Dehnringen als Ergebnis der Untersuchung von Verschraubungen gegen Lösen durch Vibration,
Fig. 7 in einer vergrößerten Seitenansicht eine in einem Werkstück angeordnete Paß-Dehnschraube und
Fig. 8 in einer Seitenansicht die Paß-Dehnschraube gemäß Fig. 7.

Der in Fig. 1 dargestellte Paß-Dehngewindebolzen 200 besteht aus einem Schaft 20 mit einem einendig ausgebildeten Antrieb 21. Benachbart zu seinem Antrieb 21 weist der Schaft 20 einen Abschnitt mit einem Befestigungsgewinde 223 und in seinem Endbereich 20a einen weiteren Abschnitt mit einem Befestigungsgewinde 23 auf, das als Festsitzgewinde ausgebildet und mit einem Führungs- bzw. Aufsitz(Gegendruck)-Zapfen versehen ist.

Der sich an das Festsitzgewinde 23 anschließende Führungszapfen 20a dient zugleich als Aufsitz- bzw. Gegendruck-Zapfen nach dem Einschrauben des Paß-Dehngewindebolzens in der Gewindebohrung. Hierdurch tritt neben dem Gewindereibmoment des Festsitzgewindes eine Vorspannkraft zwischen dem Festsitzgewinde und dem Gegengewinde in der Bohrung auf, so daß der Paß-Dehngewindebolzen eine zusätzliche Verankerung in einem Bauteil erfährt, bevor das zweite Bauteil mit dem Befestigungsgewinde verschraubt wird und hierdurch eine weitere Vorspannung durch Zugkraft auftritt.

Die Antriebskraft zur Verschraubung des Paß-Dehngewindebolzens mit der Seite des Festsitzgewindes 23 in einem Bauteil erfolgt über ein Sechskant- oder Torx-Antriebssystem (wie dargestellt) an dem Ende des Befestigungsgewindes 223 oder kann mit Hilfe eines Spezialschraubers durch Klemmung an diesem Befestigungsgewinde erfolgen. Um eine Beschädigung des Befestigungsgewindes zu vermeiden, ist die Anwendung eines Torx-Antriebssystems dem Sechskant-Antriebssystem vorzuziehen.

Zwischen den beiden Befestigungsgewinden 23, 223 ist ein Abschnitt 22 auf dem Schaft 20 mit einer Anzahl von parallel zueinander verlaufenden konzentrischen Paß-Dehnringen 220 angeordnet. Zwischen je zwei Paß-Dehnringen ist eine konzentrische Paßnut 221 mit einem Kerbgrund ausgebildet.

Die konzentrischen Paß-Dehnringe 220 weisen einen Spannungsquerschnitt im Kerbgrund der Paßnuten 221 auf, der dem Gewindespannungsquerschnitt $[A_S]$, der in Fig. 1 bei 123a angedeutet ist, der Befestigungsgewinde 23, 223 entspricht, wobei der Radius im Kerbgrund 220a das Zwei- bis Dreifache des Kernradius der Befestigungsgewinde beträgt oder einen Doppelradius aufweist, der jeweils im Zwei- bis Dreifachen des Kernradius der Befestigungsgewinde liegt. Die Kammbreite, in Fig. 1 bei 220b angedeutet, der konzentrischen Paß-Dehnringe 220 entspricht annähernd der Flankenbreite der Vorform der Paß-Dehnringe.

Der Außendurchmesser der konzentrischen Paß-Dehnringe ist um 0,1 bis 0,5 mm größer als der Außendurchmesser der Befestigungsgewinde 23, 223.

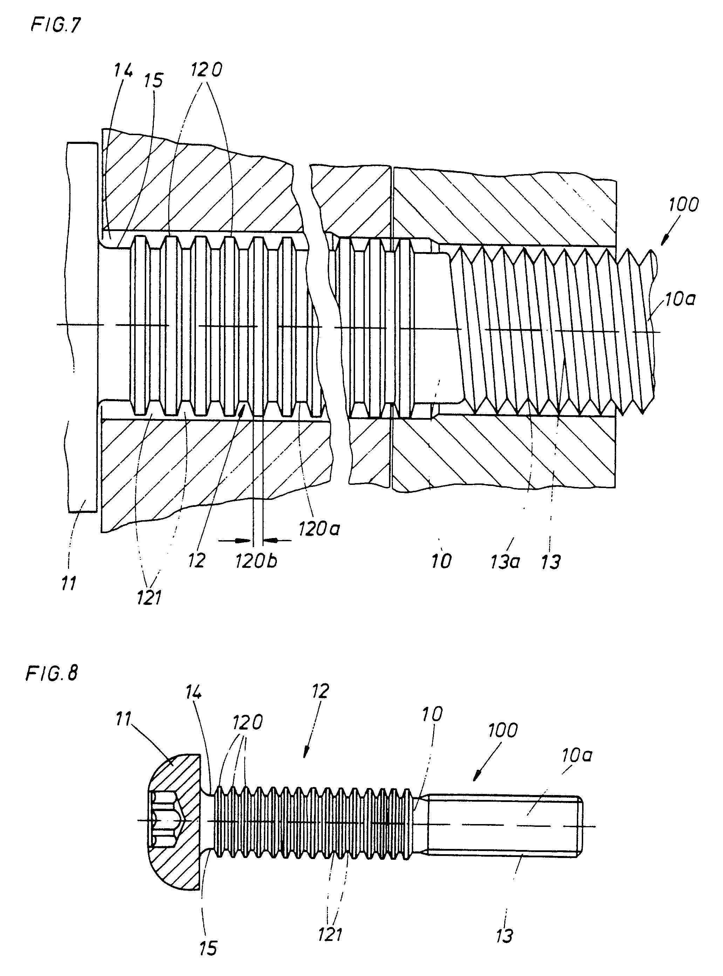

Zur Erläuterung der voranstehenden Ausführungen wird auf die Fig. 7 und 8 Bezug genommen, die eine Paß-Dehnschraube zeigen. Da es sich hierbei um eine Paß-Dehnschraube handelt, fällt diese Ausgestaltung nicht unter den Schutzumfang des Anspruchs 1 sondern ist Gegenstand der Urbsprungsanmeldung. Die in den Fig. 7 und 8 dargestellte Paß-Dehnschraube 100 besteht aus einem Schraubenschaft 10 mit einendig an diesem angeformten Kopf 11. Der Schraubenschaft 10 ist benachbart zu seinem Kopf mit einem Abschnitt 12 versehen, der eine Anzahl von parallel zueinander verlaufenden, konzentrischen Paß-Dehnringen 120 aufweist. Die zwischen je zwei Paß-Dehnringen 120 ausgebildete konzentrische Paßnut ist mit 121 und ihr Kerbgrund mit 120a bezeichnet. An den Abschnitt 12 mit den konzentrischen Paß-Dehnringen 120 schließt sich ein Schraubenbefestigungsgewinde 13 an, welches bis zum Ende 10a des Schraubenschaftes 10 der Paß-Dehnschraube 100 geführt ist. Im übergangsbereich vom Schraubenkopf 11 zum Abschnitt 12 mit den konzentrischen Paß-Dehnringen 120 ist eine Hohlkehle 14 mit einer bei 15 angedeuteten Ausrundung vorgesehen. Der Durchmesser der Ausrundung 15 und der Hohlkehle 14 ist etwa gleich dem Durchmesser des Flankenmaßes der konzentrischen Paß-Dehnringe 120. Der Krümmungsradius der Hohlkehle 14 beträgt das 0,1 bis 0,15-fache des Außendurchmessers des Befestigungsgewindes 13. Die konzentrischen Paß-Dehnringe 120 weisen einen Spannungsquerschnitt im Kerbgrund der Paßnuten 121 auf, der in Fig. 7 bei 120a [$A_{konz.Ringe}$] angedeutet ist und der dem Gewindespannungsquerschnitt [$A_S$], der mit 13a bezeichnet ist, des Befestigungsgewindes 13 entspricht, wobei der Radius im Kerbgrund 120a das Zwei- bis Dreifache des Kernradius des Befestigungsgewindes beträgt oder einen Doppelraidus aufweist, der jeweils im Zwei- bis Dreifachen des Kernradius des Befestigungsgewindes liegt. Die Kammbreite, in Fig. 7 bei 120b angedeutet, der konzentrischen Paß-Dehnringe 120 entspricht annähernd der Flankenbreite der Vorform der Paß-Dehnringe.

In Fig. 6 ist das Ergebnis der Untersuchung von Verschraubungen gegen Lösen durch Vibration am Beispiel einer Pleuelschraube M 8 x 1 x 40,5 (Kurve 1) und einer Pleuelschraube mit konzentrischen Paß-Dehnringen M 8 x 1 x 42 (Kurve 2) dargestellt.

**Patentansprüche**

1. Verbindungselement für zwei Maschinen- oder Bauteile, wie Paß-Dehngewindebolzen, mit einem Schaft (20), der an seinem einen Ende mit einem Antrieb (21) versehen ist und der benachbart zu seinem Antrieb (21) ein erstes Befestigungsgewinde (223) und an seinem anderen Ende ein zweites Befestigungsgewinde (23) aufweist, das als Festsitzgewinde ausgebildet ist, dadurch gekennzeichnet, daß der Schaft (20) zwischen den beiden Befestigungsgewinden (23, 223) einen Schaftabschnitt (22) mit einer Anzahl von parallel zueinander verlaufenden konzentrischen Paß-Dehnringen (220) aufweist, deren Außendurchmesser um 0,1 bis 0,5 mm nach der Formel

$$d_{Ringe} > d_1$$

größer als der Außendurchmesser der beiden Befestigungsgewinde (23,223) ist und die einen Spannungsquerschnitt in dem Kerbgrund der Paßnuten (221) zwischen je zwei konzentrischen Paß-Dehnringen (220) [$A_{konz.Ringe}$] aufweisen, der dem Spannungsquerschnitt [$A_S$] (13a) der Befestigungsgewinde (23,223) nach der Formel

$$A_S = A_{konz.Ringe}$$

entspricht, wobei der Kerbgrund durch einen Radius bestimmt ist, der das Zwei- bis Dreifache des Kernradius der Befestigungsgewinde (23, 223) beträgt oder durch zwei Radien bestimmt ist, die jeweils dem Zwei- bis Dreifachen des Kernradius der Befestigungsgewinde (23, 223) entsprechen, und daß die Kammbreite der konzentrischen Paß-Dehnringe (220) annähernd der Flankenbreite der Vorform der Paß-Dehnringe (220) zur Erzielung einer angemessenen Größe der spielfreien Anlagenfläche zwischen dem Paß-Dehnschraubenbolzen und der Paß-Bohrung in den Maschinen- oder Bauteilen entspricht.

2. Verbindungselement nach Anspruch 1, dadurch gekennzeichnet, daß der Schaft (20) an seinem das zweite Befestigungsgewinde (23) tragenden Ende gegebenenfalls einen Führungs- und Aufsitz- bzw. Gegendruckzapfen (20a) aufweist.

**Claims**

1. A connecting element for two machine parts or structural parts such as fitted antifatigue threaded bolts with a barrel (20) which, on one of its extremities, is provided with a drive means (21) and which, adjacent to its drive means (21), possesses a first fastening thread (223) and, on its other extremity, a second fastening thread (23) that is constructed as a close fit thread, characterized in that the barrel (20), between the two fastening threads (23, 223), is provided with a barrel section (22) having a number of concentric fitted antifatigue rings (220) extending parallel to one another, the outer diameter of which is larger by 0.1 to 0.5 mm according to the formula

$$d_{rings} > d_1$$

than the outer diameter of the two fastening threads (23, 223) and which, in the groove root of the fitting grooves (221) between every two concentric fitted antifatigue rings (220) ($A_{conc.\,rings}$) possess a stress cross section which corresponds to the stress cross-section ($A_S$) (13a) of the fastening threads (23, 223) according to the formula

$$A_S = A_{conc.\,rings},$$

the groove root being determined by a radius which amounts to the double or treble of the core radius of the fastening threads or by two radii, each of which corresponds to the double or treble of the core radius of the fastening threads (23, 223) and in that the width of the crest of the concentric fitted antifatigue rings (220) corresponds approximately to the width of the pitch of the preform of the fitted antifatigue rings (220) in order to achieve an appropriate size of the backlash-free contact surface between the fitted antifatigue threaded bolts and the fitting bore in the machine parts or structural parts.

2. A connecting element according to Claim 1, <u>characterized in that</u> the barrel (20), on its extremity bearing the second fastening thread (23), if necessary, is provided with a guide and seating pin or a counterpressure pin (20a).

**Revendications**

1. Raccord pour deux pièces de machine ou deux éléments de construction tels que boulons filetés à dilatation ajustée, avec une tige (20) qui est pourvue, à l'une de ses extrémités, d'une commande (21) et qui présente, à proximité de sa commande (21), un premier filet de fixation (223) et, à son autre extrémité, un deuxième filet de fixation (23) qui est formé comme étant un filet de serrage, caractérisé en ce que la tige (20) présente, entre les deux filets de fixation (23, 223), un tronçon de tige (22) avec une multitude d'anneaux extensibles d'ajustage (220) concentriques, parallèles les uns aux autres, dont le diamètre extérieur est supérieur de 0,1 à 0,5 mm au diamètre extérieur des deux filets de fixation (23, 223) selon la formule

$$d_{anneux} > d_1$$

et qui présentent une section de résistance dans le fond d'entaille des rainures d'ajustage (221) entre chaque groupe de deux anneaux extensibles concentriques (220) [$A_{anneaux\ conc.}$] qui correspond à la section de résistance [$A_S$] (13a) des filets de fixation (23, 223) selon la formule

$$A_S = A_{anneux\ conc.}$$

le fond d'entaille étant déterminé par un rayon qui est du double au triple du rayon du noyau des filets de fixation (23, 223) ou qui est déterminé par deux rayons qui correspondent respectivement au double ou au triple du rayon du noyau des filets de fixation (23, 223) et que la largeur de la crête des anneaux concentriques extensibles d'ajustage (220) correspond approximativement à la largeur des flancs de l'ébauche des anneaux extensibles d'ajustage (220) pour obtenir une grandeur appropriée de la surface d'about sans jeu entre le boulon fileté à dilatation ajustée et la forure d'ajustage des pièces de machine ou éléments de construction.

2. Raccord selon la revendication 1, caractérisé en ce que la tige (20) présente éventuellement à son extrémité qui porte le second filet de fixation (23) un tourillon de guidage, d'accrochage et/ou de contre-pression (20a).

FIG.1

FIG. 2

FIG.3

## FIG.4

Kalibrier-Kontur

120

120

c

a

α

$s_p$

0 196 658

σ-ε-Diagramm von Pleuelschrauben

F

$R_m$ [1+2]
$R_m$ [3]
$R_{p0,2}$ [1+2]
$R_{p0,2}$ [3]

0.2 Denngrenze

1: Dünnschaftschrauben     $A_S < A$ Flanken ⌀

2: Paßdehnschrauben mit konz. Ringen     $A_S = A$ konz. Ringen

3: Dehnschrauben     $A_S > A$ Dehnschaft

Gleichmaßdehnung 1
Gleichmaßdehnung 2
Gleichmaßdehnung 3

ε

FIG.5

0 196 658

FIG.6

1: Pleuelschraube $\quad A_S < A_{\text{Flankendurchmesser}}$

2: Pleuelschraube $\quad A_S = A_{\text{konz. Ringen}}$
   mit konz. Ringen

$F_V$ (%)

$100 \% \;\hat{=}\; 25000\ N$

100

80

60

40

20

0

0    200    400    600    800    1000    1200

2

1

Lw

0 196 658

FIG.7

FIG.8

9